# EUROPÄISCHE PATENTANMELDUNG

(11) **EP 0 926 220 A1**
(43) Veröffentlichungstag der Anmeldung: **30.06.1999**
(21) Anmeldenummer: 98123298.6
(22) Anmeldetag: 08.12.1998
(51) Int. Cl.: C10K 3/06

(54) **Verfahren zum thermischen Behandeln eines aus der Vergasung kohlenstoffhaltiger Materialien kommenden Gasgemisches**

(30) Priorität: 10.12.1997 DE 19754802
(71) Anmelder: Metallgesellschaft Aktiengesellschaft, 60325 Frankfurt am Main (DE)
(72) Erfinder: Albrecht, Johannes Dr., 61206 Wöllstadt (DE); Dernbach, Heribert, 65527 Niedernhausen (DE); Löffler, Johannes Dr., 61348 Bad Homburg (DE)

(57) **Zusammenfassung**

Das aus der Vergasung kommende Gasgemisch enthält neben anderen Komponenten H₂, CO und CO₂, sowie 0,5 bis 20 Vol.-% kondensierbare Kohlenwasserstoffe, deren atmosphärische Siedepunkte oberhalb 80°C liegen. Diese kondensierbaren Kohlenwasserstoffe stören und müssen mindestens teilweise beseitigt werden. Zu diesem Zweck wird das Gasgemisch auf eine Temperatur von höchstens 500°C gekühlt und entstaubt, bevor man das Gasgemisch mit einem definierten O₂-Gehalt in einen Thermospeicher leitet, der eine gasdurchlässige Feststoff-Füllung enthält. Im Thermospeicher wird der definierte O₂-Gehalt durch partielle Oxidation aufgebraucht, dabei werden die kondensierbaren Kohlenwasserstoffe mindestens teilweise thermisch gespalten. Das Gasgemisch strömt von einem Eintrittsbereich der Feststoff-Füllung zu einem Austrittsbereich der Füllung, dabei liegt die maximale Temperatur in der Füllung zwischen dem Eintrittsbereich und dem Austrittsbereich und beträgt 900 bis 1500°C. Die Temperatur des Gasgemisches liegt am Eintritt in die Füllung unter der Zündtemperatur des Gasgemisches und mindestens 200°C unter der maximalen Temperatur. Am Austritt wird das Gasgemisch mit einer Temperatur aus der Füllung abgezogen, die mindestens 200°C unter der maximalen Temperatur liegt. Vorzugsweise wird der Eintritts- und Austrittsbereich der Füllung zyklisch vertauscht.

## Beschreibung

Die Erfindung betrifft ein Verfahren zum thermischen Behandeln eines Gasgemisches aus der Vergasung eines kohlenstoffhaltigen Materials, wobei das Gasgemisch Wasserstoff, Kohlenoxide und 0,5 bis 20 Vol.-% kondensierbare Kohlenwasserstoffe enthält, deren atmosphärische Siedepunkte oberhalb 80°C liegen.

Ein Verfahren dieser Art ist aus dem US-Patent 5 425 317 bekannt. Das aus der Vergasung kommende Gasgemisch wird hierbei durch eine Brennkammer geleitet und unter Zugabe von O₂-haltigem Gas bei Temperaturen von 1200 bis 1900°C verbrannt. Dabei entsteht flüssige Schlacke, die man getrennt vom Verbrennungsgas aus der Brennkammer abzieht. In der Brennkammer werden verschiedene Komponenten des eingeleiteten Gasgemisches, darunter auch polycyclische aromatische Kohlenwasserstoffe, verbrannt.

Der Erfindung liegt die Aufgabe zugrunde, beim eingangs genannten Verfahren die polycyclischen aromatischen Kohlenwasserstoffe (z. B. Teere und Phenole) möglichst selektiv zu entfernen. Erfindungsgemäß gelingt dies dadurch, daß man das Gasgemisch auf eine Temperatur von höchstens 500°C kühlt und mindestens teilweise entstaubt und das gekühlte Gasgemisch mit einem definierten O₂-Gehalt in einen Thermospeicher leitet, der eine gasdurchlässige Feststoff-Füllung enthält, wobei der definierte O₂-Gehalt im Thermospeicher durch partielle Oxidation aufgebraucht wird und die kondensierbaren Kohlenwasserstoffe im Thermospeicher mindestens teilweise thermisch gespalten werden, daß das Gasgemisch von einem Eintrittsbereich der Füllung zu einem Austrittsbereich der Füllung strömt, daß die maximale Temperatur in der Füllung zwischen dem Eintrittsbereich und dem Austrittsbereich liegt und 900 bis 1500°C beträgt, daß die Temperatur des Gasgemisches am Eintritt in die Füllung unter der Zündtemperatur des Gemisches und mindestens 200°C unter der maximalen Temperatur liegt und daß das Gasgemisch am Austritt mit einer Temperatur aus der Füllung abgezogen wird, die mindestens 200°C unter der maximalen Temperatur liegt.

Die O₂-Konzentration im Gasgemisch am Eintritt in die Füllung des Thermospeichers, die hier als "definierter O₂-Gehalt" bezeichnet wird, muß ziemlich genau eingestellt werden. Üblicherweise wird der in jedem Anwendungsfall optimale definierte O₂-Gehalt in der Anfahrphase einer Anlage durch Versuche ermittelt. Wichtig ist, daß der O₂-Gehalt noch im Thermospeicher aufgebraucht ist; daraus folgt auch, daß das Gas in seinem Heizwert nicht wesentlich verändert wird.

Die Feststoff-Füllung des Thermospeichers weist in ihrem Innern einen heißen Bereich auf, wo auch die maximale Temperatur erreicht wird. Hier wird die für die thermische Spaltung der Kohlenwasserstoffe notwendige Temperatur überschritten und zumindest eine partielle Entfernung dieser störenden Kohlenwasserstoffe erreicht. Durch die thermische Spaltung werden Moleküle der kondensierbaren Kohlenwasserstoffe in wesentlich kleinere Moleküle gespalten. Der O₂-Gehalt im Gasgemisch ist so eingestellt, daß das Gasgemisch praktisch O₂-frei den Austrittsbereich der Füllung verläßt. Zum Austrittsbereich hin sinkt dadurch die Temperatur in der Füllung wieder ab, was erwünscht ist.

Es ist möglich, den Austrittsbereich der Feststoff-Füllung dadurch auf relativ niedriger Temperatur zu halten, daß man den Eintritts- und Austrittsbereich der Füllung zyklisch vertauschbar ausbildet. Dadurch leitet man in einer ersten Phase, die auch als erster Zyklus bezeichnet werden kann, das gekühlte Gasgemisch, das Temperaturen von höchstens 500°C und vorzugsweise höchstens 400°C aufweist, in den Eintrittsbereich der Feststoff-Füllung und durch diese Füllung hindurch. In der nächsten Phase, d. h. während des nächsten Zyklus, wird die Feststoff-Füllung in umgekehrter Richtung durchströmt, so daß der frühere Eintrittsbereich nun zum Austrittsbereich wird und die in der früheren Phase erfolgte Kühlung das hindurchströmende heißere Gasgemisch kühlt, so daß es relativ kühl ausströmt. Der nächste Zyklus entspricht dann wieder dem zuvor beschriebenen ersten Zyklus.

Die Feststoff-Füllung im Thermospeicher kann in horizontaler oder senkrechter Richtung oder in einer anderen gewünschten Richtung durchströmt werden. Die gasdurchlässige Feststoff-Füllung wird beispielsweise durch eine Schüttung aus Keramikkörper gebildet, wobei man z. B. Kugeln mit Durchmessern im Bereich von 5 bis 50 mm verwenden kann. An die Stelle einer Schüttung aus Keramikkörpern können z. B. auch wabenförmige Strukturen treten.

Bei dem zu vergasenden kohlenstoffhaltigen Material kann es sich z. B. um Kohle, Braunkohle, Abfallstoffe, Torf, Holz, Altöl oder Schlämme handeln, wobei auch Gemische dieser Materialien vergast werden können. Die Vergasung kann in an sich bekannter Weise in verschiedenartigen Reaktoren erfolgen, z. B. im Festbett, im Wirbelbett oder in der zirkulierenden Wirbelschicht. Die Vergasungstemperaturen liegen im allgemeinen im Bereich von 700 bis 1100°C.

Im Thermospeicher wird dafür gesorgt, daß der Gehalt der kondensierbaren Kohlenwasserstoffe im Gasgemisch zumindest zum größten Teil verschwindet, so daß das abgezogene Gemisch höchstens noch 20 % und vorzugsweise höchstens noch 10 % des Gehalts an kondensierbaren Kohlenwasserstoffen enthält, der mit dam Gasgemisch in die Feststoff-Füllung eingetreten ist. Die thermische Spaltung der kondensierbaren Kohlenwasserstoffe im Innern der Feststoff-Füllung produziert gasförmige Bestandteile, darunter auch Wasserstoff und Kohlenoxide. Dadurch, daß man den O₂-Gehalt im eintretenden Gasgemisch niedrig hält, verhindert man, daß im Thermospeicher eine zu intensive Verbrennung stattfindet und wertvolle Gaskomponenten, insbesondere H₂ und CO, in störendem Maß verbraucht werden.

Ausgestaltungsmöglichkeiten des Verfahrens werden mit Hilfe der Zeichnung erläutert.
- Fig. 1: zeigt ein Fließschema des Verfahrens, und
- Fig. 2: zeigt eine Variante des Temperaturverlaufs in der Feststoff-Füllung.

In einem Reaktor (1) wird kohlenstoffhaltiges Material, das durch die Leitung (2) herangeführt wird, bei Temperaturen im Bereich von 700 bis 1100°C im Wirbelzustand vergast. Sauerstoffhaltiges Fluidisierungsgas (z. B. Luft oder mit O₂ angereicherte Luft) wird dem Reaktor durch die Leitung (3) zugeführt. Falls erforderlich, kann man Wasserdampf und/oder weiteres O₂-haltiges Gas in den Reaktor durch die Leitung (4) zugeben. Asche wird durch die Leitung (6) entfernt. Ein Gas-Feststoff-Gemisch gelangt vom oberen Bereich des Reaktors (1) durch den Kanal (8) in einen Zyklonabscheider (9), und abgeschiedene Feststoffe werden durch die Rückführleitung (10) in den unteren Bereich des Reaktors (1) zurückgeführt.

Das in der Vergasung im Reaktor (1) gebildete Gasgemisch enthält zahlreiche Komponenten und darunter auch H₂, CO, CO₂, Methan und kondensierbare Kohlenwasserstoffe mit atmosphärischen Siedepunkten oberhalb 80°C. Das heiße Gasgemisch, das mit einer Temperatur im Bereich von 700 bis 1100°C in der Leitung (12) den Abscheider (9) verläßt, wird zunächst in einem Abhitzekessel (13) auf eine Temperatur im Bereich von 100 bis 500°C gekühlt. Das Gasgemisch strömt dann durch die Leitung (14) zu einer Filteranlage (15), wo es entstauöt wird. Der anfallende Staub wird durch die Leitung (16) abgezogen.

Das entstaubte und gekühlte Gasgemisch, das unter anderem noch störende kondensierbare Kohlenwasserstoffe enthält, wird in der Leitung (17) abgezogen. Durch die Leitung (18) wird dem Gasgemisch O₂-haltiges Gas (z. B. Luft) in solcher Menge zudosiert, daß das Gasgemisch der Leitung (17) den "definierten O₂-Gehalt" aufweist. Dieser definierte O₂-Gehalt liegt üblicherweise im Bereich der 0,5- bis 5-fachen O₂-Menge, die zur Temperaturerhöhung auf die maximale Temperatur nötig ist.

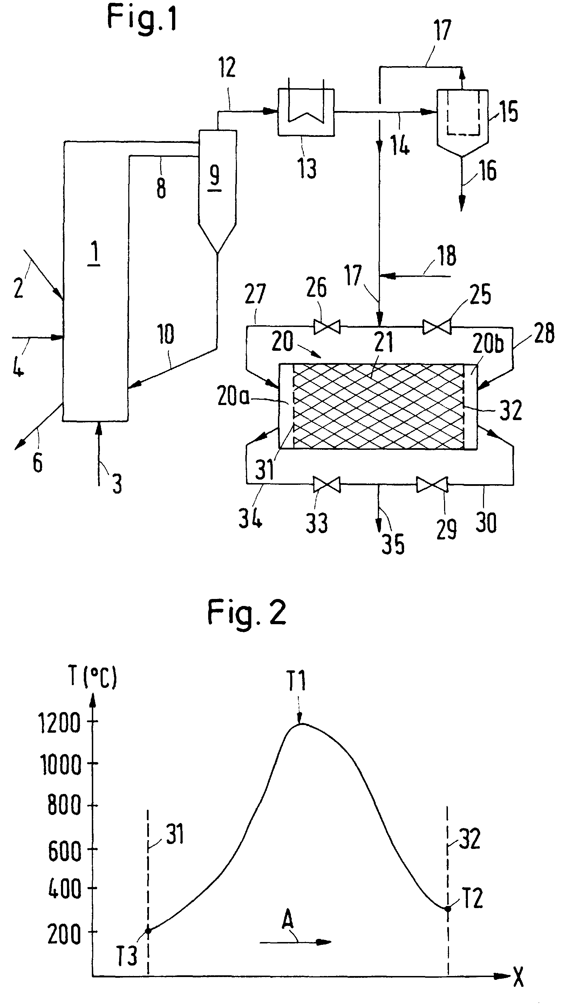

Das O₂-haltige Gasgemisch wird dann durch den Thermospeicher (20) geführt, der eine gasdurchlässige Feststoff-Füllung (21) enthält. Während das Ventil (25) geschlossen ist, leitet man das Gasgemisch durch das geöffnete Ventil (26) und die Leitung (27) zunächst in eine Verteilkammer (20a) und dann durch ein erstes Verteilgitter (31) in den Eintrittsbereich der Feststoff-Füllung (21). Der ungefähre Temperaturverlauf in der Feststoff-Füllung zwischen dem Verteilgitter (31) und einem zweiten Gitter (32), welches den Austrittsbereich der Füllung begrenzt, ist in Fig. 2 dargestellt.

Die Feststoff-Füllung (21) ist durch vorausgegangene Durchströmungszyklen im Innern etwa in der Strömungsmitte auf eine maximale Temperatur (T1) aufgeheizt, die im Bereich von 900 bis 1500°C und vorzugsweise 1000 bis 1300°C liegt. Beim Eindringen in die Füllung (21), wie das in Fig. 2 durch den Strömungspfeil (A) angedeutet ist, wird das Gasgemisch immer mehr erhitzt und überschreitet dabei die Zündtemperatur für die Reaktion von O₂ mit den brennbaren Gasbestandteilen. Durch die Verbrennung wird die Feststoff-Füllung partiell erhitzt, wobei jedoch das Temperatur-Maximum (T1) üblicherweise nicht wesentlich verschoben wird. Das heiße Gas erwärmt beim Weiterströmen in Richtung zum Gitter (32) den Innenbereich der Füllung, wie das etwa durch den Temperaturverlauf in Fig. 2 zwischen (T1) und (32) angedeutet ist. Da der Austrittsbereich der Feststoff-Füllung in der Nähe des Gitters (32) im vorausgegangenen Zyklus durch einströmendes kühles Gasgemisch gekühlt worden war, erhöht sich die Temperatur der Feststoff-Füllung in diesem Bereich durch das ausströmende Gasgemisch nur relativ wenig. Wichtig ist dabei, daß die Verbrennung durch O₂-Mangel noch im Mittelbereich der Füllung endet. Dadurch liegt die Austrittstemperatur (T2) nicht sehr viel höher als die Eintrittstemperatur (T3). Dabei wird insbesondere dafür gesorgt, daß die Austrittstemperatur (T2) mindestens 200°C unter der maximalen Temperatur (T1) liegt, und auch, daß die Temperatur (T2) deutlich unter der Zündtemperatur des Gasgemisches mit definiertem O₂-Gehalt liegt.

Wie aus Fig. 1 ersichtlich, strömt das vom Austrittsbereich der Füllung (21) kommende Gasgemisch durch das zweite Gitter (32), durch eine zweite Verteilkammer (20b), durch die Leitung (30) und das geöffnete Ventil (29) zur Abzugsleitung (35). Während dieser Phase ist das Ventil (33) geschlossen. Beim nächsten Zyklus schließt man die Ventile (26) und (29) und öffnet die Ventile (25) und (33), so daß nunmehr das Gasgemisch der Leitung (17) von der Leitung (28) kommend in der Gegenrichtung durch die Feststoffschüttung (21) strömt. Dabei wirkt das Gas in der Nähe des Gitters (32) zunächst kühlend auf die Schüttung, bis dann im Innern der Schüttung die Zündtemperatur überschritten ist, Oxidationsreaktionen einsetzen und die kondensierbaren Kohlenwasserstoffe thermisch gespalten werden. Durch O₂-Mangel endet die Verbrennung innerhalb der Füllung (21), so daß ein relativ kühles Gasgemisch den Speicher (20) durch die Leitung (34), das Ventil (33) und die Leitung (35) verläßt. Das Gas der Leitung (35) kann z. B. einer Nutzung als Brenngas oder Synthesegas zugeführt werden. Im nächsten Zyklus wird der Thermospeicher wieder in Richtung (A), vgl. Fig. 2, durchströmt, wobei die Ventile (26) und (29) offen und die Ventile (25) und (33) geschlossen sind. Ein Zyklus dauert üblicherweise 0,5 bis 10 Minuten.

### Beispiel:

Man arbeitet mit einer der Zeichnung entsprechenden Anlage; die Daten sind teilweise berechnet.

Dem Wirbelschicht-Reaktor (1) gibt man pro Stunde 5881 kg Abfallbiomassen (vor allem zerkleinertes Anfallholz) auf und vergast das Material bei einer Temperatur von 900°C unter Zufuhr 6000 Nm³ Luft, wobei die Luft auf 200°C vorgewärnt ist. Das in der Leitung (12) abgezogene Produktgas wird auf 250°C gekühlt und entstaubt. Pro Stunde fallen in der Leitung (17) 13160 Nm³ Produktgas mit folgender Zusammensetzung an;

| | |
|---|---|
| CO | 20 Vol.-% |
| H₂ | 11 Vol.-% |
| N₂ | 45 Vol.-% |
| CH₄ | 6 Vol.-% |
| CO₂ | 12 Vol.-% |
| H₂O | 6 Vol.-% |

Das Gas enthält 3 g/Nm³ nicht kondensierbare Kohlenwasserstoffe nit atmosphärischem Siedepunkt oberhalb 80°C, insbesondere Teer und Phenole.

Durch die Leitung (18) dosiert man 400 Nm³/h O₂ in Form von mit Sauerstoff angereicherter Luft zu und leitet das Gasgemisch zunächst bei geschlossenen Ventilen (25) und (33) durch das geöffnete Ventil (26) und die Leitung (27) in den Thermospeicher (20); das Ventil (29) ist ebenfalls geöffnet.

Der Thermospeicher (20) hat die Form eines liegenden Zylinders, der Eintrittsquerschnitt der Feststoff-Füllung (21) betrãgt 4 m, und ihre horizontale Länge beträgt 12 m. Die maximale Temperatur T1 erreicht 1150°C, Eintrittstemperatur T3 = 250°C, Austrittstemperatur T2 = 400°C. Die Füllung (21) besteht aus Keramikkugeln mit Durchmessern von etwa 30 mm. Nachdem der Speicher (20) 3 Minuten lang in einer Richtung durchströmt wurde, erfolgt die Umschaltung und die Durchströmung in der Gegenrichtung. Das in der Leitung (35) abgezogene Produktgas enthält nur noch 10 % der eingeleiteten, nicht kondensierbaren Kohlenwasserstoffe, der O₂-Gehalt des Gases beträgt etwa 80 ppm.

## Patentansprüche

1. Verfahren zum thermischen Behandeln eines Gasgemisches aus der Vergasung eines kohlenstoffhaltigen Materials, wobei das Gasgemisch Wasserstoff, Kohlenoxide und 0,5 bis 20 Vol.-% kondensierbare Kohlenwasserstoffe enthält, deren atmosphärische Siedepunkte oberhalb 80°C liegen, dadurch gekennzeichnet, daß man das Gasgemisch auf eine Temperatur von höchstens 500°C kühlt und mindestens teilweise entstaubt und das gekühlte Gasgemisch mit einem definierten O₂-Gehalt in einen Thermospeicher leitet, der eine gasdurchlässige Feststoff-Füllung enthält, wobei der definierte O2-Gehalt im Thermospeicher durch partielle Oxidation aufgebraucht wird und die kondensierbaren Kohlenwasserstoffe im Thermospeicher mindestens teilweise thermisch gespalten werden, daß das Gasgemisch von einem Eintrittsbereich der Füllung zu einem Austrittsbereich der Füllung strömt, daß die maximale Temperatur in der Füllung zwischen dem Eintrittsbereich und dem Austrittsbereich liegt und 900 bis 1500°C beträgt, daß die Temperatur des Gasgemisches am Eintritt in die Füllung unter der Zündtemperatur des Gasgemisches und mindestens 200°C unter der maximalen Temperatur liegt und daß das Gasgemisch am Austritt mit einer Temperatur aus der Füllung abgezogen wird, die mindestens 200°C unter der maximalen Temperatur liegt.

2. Verfahren nach Anspruch 1, dadurch gekennzeichnet, daß der Eintritts- und Austrittsbereich der Füllung vertauschbar ausgebildet sind.

3. Verfahren nach Anspruch 1 oder 2, dadurch gekennzeichnet, daß der Gehalt des Gasgemisches an kondensierbaren Kohlenwasserstoffen im vom Austrittsbereich abgezogenen Gemisch höchstens 20 % des Gehalts im Eintrittsbereich beträgt.
